# EUROPEAN PATENT APPLICATION

(11) **EP 3 040 598 A1**
(43) Date of publication of application: **06.07.2016**
(21) Application number: 15460123.1
(22) Date of filing: 21.12.2015
(51) Int. Cl.: F16P 3/14

(54) **PROXIMITY SYSTEM FOR PROTECTION OF WORK AREA WITH MOBILE DEVICES**

(30) Priority: 22.12.2014 PL 41070614
(71) Applicant: ENTE Spólka z ograniczona odpowiedzialnoscia, 44-100 Gliwice (PL)
(72) Inventor: Ogaza, Roman, 44-102 Gliwice (PL); Kaminski, Grzegorz, 44-25 Rybnik (PL); Hejczyk, Tomasz, 44-321 Marklowice (PL)

(57) **Abstract**

Proximity system for protecting work area with mobile devices encompasses generator (1) with controlling elements, which generates a magnetic field, and alarm device which is a device of radio frequency capable of detecting magnetic field. The alarm device **(2)** reads intensity of this magnetic field and distinguishes between intensities for the purpose of determining whether fixed allowable values have been exceeded and it generates an alarm, however at least one generator (3) generates close magnetic field in the **XY** plane and each one is an individual personal transmitter of continual activity which contains **DDS** (Direct Digital Synthesis) tone generator from which the signal is modulated single-sideband onto the range of radio waves or through the bandpass system it is tone transmitted onto the range of radio waves.

## Description

The subject of invention is proximity system serving the purpose of protecting the work area with mobile devices, especially internal transport, dedicated at protection of people performing work in the area where logistic operations are conducted.

In known proximity systems warning zone is indicated with the use of RFID technology (Radio Frequency Identification), radar systems or magnetic field. Limitations in application of particular technologies result among others from conditions of the work environment where e.g. occurring metallic materials modify the radio signal track and RF receivers applied for distance indication may indicate the distance wrongly. Also GPS signals undergo reflections of surrounding equipment causing erroneous calculations of distance between receivers and vehicles. Therefore, in closed spaces and roofed constructions use of this technology is limited. In known and frequently used systems for the purpose of personal and property security warning zones are indicated around a dangerous device and under and overground areas thus generating magnetic field.

According to patent description of the invention US7420471 (B2) a safety system is known dedicated at use in coal-mines, in which surrounding magnetic field, within low frequencies about 100 kHz and middle frequencies scope from 100 kHz to less than 500 kHz is generated by a generator placed on a moving machine. In the system a personal warning device is applied, which is able to detect the marking field and detect market field as well as double-sided communication between a protected person and a machine against which this person is protected. Warnings are communicated to workers who are dangerously close to the operating machine as well as warnings are communicated to a machine operator. In the system the principle of immobilisation is binding until the personnel reaches a safe place. Operating within the general system the safety system contains measures for transmission as well as information concerning operational safety.
According to the patent description US5767669A the manner of detecting the position and orientation of remote sensors with the use of impulse magnetic field generated in a fixed location. Impulse magnetic fields are successively generated from numerous spatially independent components defining source coordinating frame. Impulse magnetic fields are detected by remote sensors possessing numerous elements of passive field sensors. Distortions of eddy current are detected separately and subtracted by the system. The system measures the influence of metallic objects present in the environment as well as it dynamically adjusts measured values accordingly. Detected magnetic fields free from distortions of eddy current are used for the purpose of calculating the position and orientation of a distant object.
Also a system is known from the description of European patent PL/EP2210246T3 system of proximity detection encompassing the generator generating magnetic field, the generator is capable of receiving feedback signals as well as alert device which sends feedback signals, which is capable of detecting the mentioned magnetic field and generation of feedback signal. In the system the generator generates magnetic field by the first in advance indicated time sequence and detects feedback signal from the alert device within the second, in advance determined time sequence. The aforementioned alarm device generates feedback signal with the first time length when the alarm device detects the magnetic field of the first intensity or alarm device generates feedback signal of the second time length when alarm device detects magnetic field of the second intensity and the first intensity differs from the second and the first time length differs from the second time length.

Also safety system for mining devices in anti-explosion cases is known from the description of invention US2006087443 A1 containing generator with resonant circuit as well as receiving device registering field intensity. The system possesses alarm device informing the personnel performing work near mining machines and interrupting operation of devices in case of detecting a hazard. Known from patent description US6686881B1 wireless identification system specifies the value of the level of magnetic field sent by a remote station. The system contains the formula of the processor with discrete elements enabling specification of distance between a remote station and base station. Signal is generated proportional to the distance between the stations and the distance is specified on the basis of the function depending on exceeding thresholds of magnetic field of transmission station in the function of time and threshold of the field of receiving station.
Detection and vehicle route traffic control, also based on magnetic field generator, known from the description of US20140125488A invention contains signal generator equipped with generation circuit of magnetic field, in which capacity and inductiveness create serial circuit and the change in the value of magnetic field takes place by means of the change in inductance of a circuit.
From the description of the patent US9041546B2 the system of detecting a position of a person in relation to a moving machine is known. In the solution the field is generated around the machine by means of its system, additionally equipped with electronic systems for data dispatch, specification of safety zones as well as warning.

Proximity system for securing work area with mobile devices, encompassing the generator with controlling elements, which generates magnetic field and alarm device, which is a device of radio frequency able to detect magnetic field, and the alarm device reads intensity of the magnetic field and distinguishes between intensities for the purpose of detecting whether allowable values have been exceeded as well as it generates the alarm, it is characterized by the fact that at least one generator generates close magnetic field in **XY** plane and each one is an individual personal transmitter of continuous activity, which contains the **DDS** tone generator (Direct Digital Synthesis), from which the signal is modulated single-sideband onto the scope of radio waves.
The generator generates radio signal of steady intensity.
Proximity system possesses safety zones I,II,III, specified by distance **d₁**, **d₂** and **d₃** between the generator and alarm device, which for each of the zones triggers gradual means of alarm.
In the system alarm device is used equipped with at least four directional detectors set orthogonally in reference to one another as well as possessing the demodulator system from which received demodulated signal is analysed by the **PSoC** (Programmable System on Chip) of the computer terminal, and alarm device is placed on each mobile device moving in the work area.
Close magnetic field operates within the range of medium waves of carrier frequency 240 kHz to 260 kHz.
The generator contains **DDS** tone generator (Direct Digital Synthesis) from which the signal through the bandpass system is transmitted tonally onto the range of radio waves.
The generator contains DDS (Direct Digital Synthesis) tone generator from which signal through bandpass system is transmitted onto the range of radio waves, and the system makes use of alarm device equipped with at least four directional detectors set orthogonally in relation to one another as well as possessing radio receiver system with antenna, from which the received signal is analysed by the **PSoC** (Programmable System on Chip) of the computer terminal, the alarm device being placed on every mobile device moving in the work area.
The sizes of safety zones I, II, III and collision parameters for the distance **d₁, d₂** and **d₃** are both determined dynamically based on the changes of measured acceleration and velocity of the mobile device.
The alarm device is equipped with **ACC** module for measurement of particular **X,Y,Z** components of acceleration and it has **ICOM** communication interface. The **PSoC** (Programmable System on Chip) in the alarm device is equipped with digital multilingual speech generator.
Close magnetic field operates within long and medium waves of carrier frequency of 240 kHz to 600 kHz.

The invention solves the problem of false alarms in the system of proximity detection. For this purpose as close magnetic (spot) field generator individual personal transmitter is applied of constant activity as well as passive alarm device equipped with the complex of directional antennas orthogonally set in relation to one another. This gives a possibility of spatial direction recognition from which a personal transmitter is approaching. Alarm device system alongside with antennas is coherent and the analysis of the radio image reaching simultaneously all antennas takes place in real time. Simultaneously, application of single-sideband modulation (SSB) or bandpass system and tone transmission enables reception of signals deprived of noises and the applied **PSoC** with mathematic algorithms allows for receiving repeatable measurements and good recognisability of objects. Moreover, magnetic field operates within the range of long and middle waves of carrier frequency to 600 kHz, which ensures better resistance to interference than applied digital forms of identification, increases the scope of operation and scope of its application also in the areas of increased accumulation of obstacles.

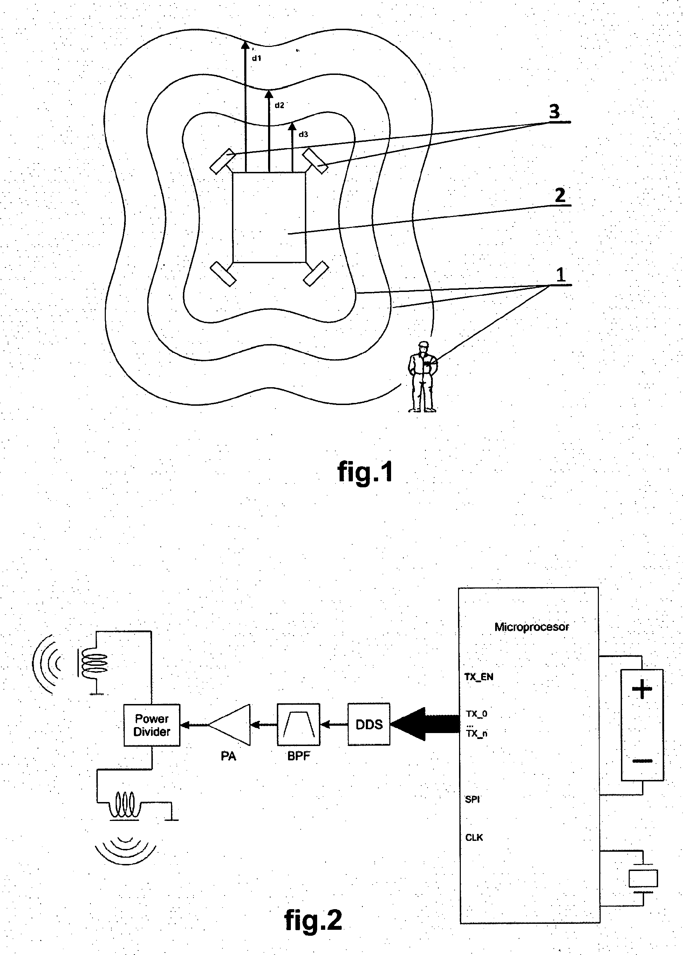

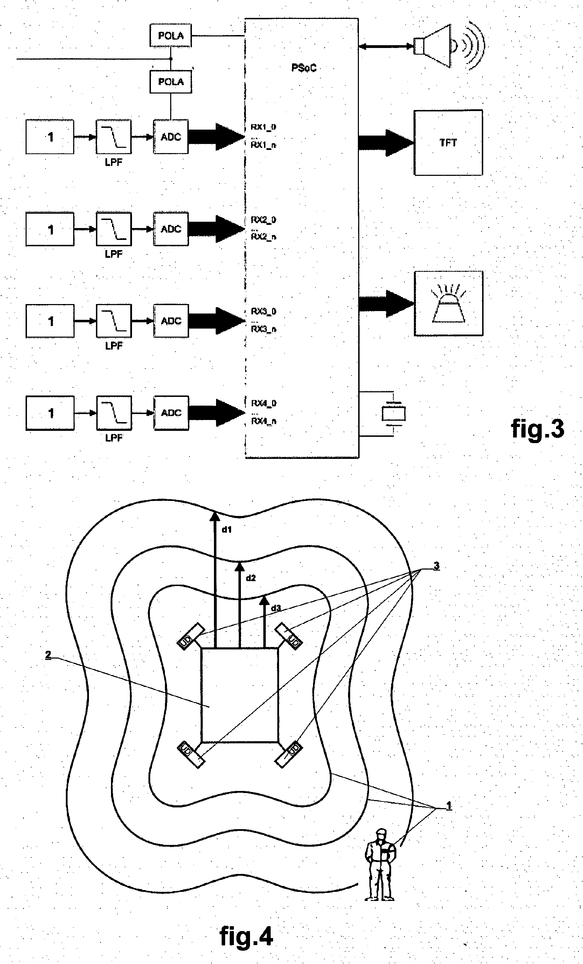

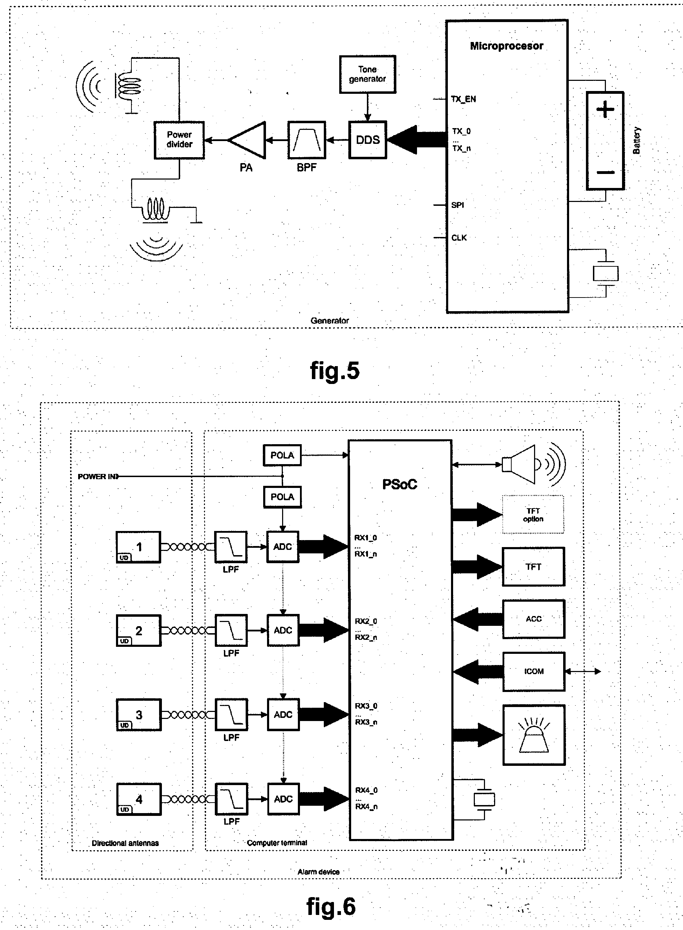

The system according to the invention is presented in an example performance in the picture, in which fig.1 and fig.4 present the scheme of the system, fig.2 and fig.5 presents block scheme of the generator, fig.3 presents the block scheme of the computer terminal and a fig.6 presents the block scheme of the alarm device.

In the proximity system for protecting the work area with mobile devices, presented in fig. 1, generator 1 generates magnetic field and alarm device 2, which is the device of radio frequency capable of detecting magnetic field reads intensity of this magnetic field as well as makes the distinction between intensities in the manner described further for the purpose of determining whether allowable values have been exceeded and alarm is generated.

Generator 1, is an individual personal transmitter of continuous activity and it generates analog signal of constant intensity and programmed carrier frequency. Close magnetic field operates within the scope of long and middle waves of carrier frequency 240 kHz to 600 kHz, it is generated on the XY plane, and hazard zones found on the plane defined by X-Y axes are quite coherent and symmetric. Generator 1_{,} as an electronic module operating on the basis of SSB modulation possesses its own power supply, moreover, it works only in transmission mode, without receiving function. For the purpose of obtaining programmed carrier frequency generator 1 contains a controlling microprocessor and tone generator making use of DDS (Direct Digital Synthesis) technology with the use of bandpass system and modulation takes place single-sideband.

Transfer of personal identifier signal onto the range of radio waves is conducted on the basis of SSB (Single SideBand modulation). SSB modulation is a kind of amplitude modulation in which only one side band is dispatched without carrier signal.
The reverse operation is conducted in demodulator of alarm device 2.
In the second option of the solution (fig.5), generator 1 is also an electronic module and it works in transmission mode without receiving function but it also works as tone generator making use of DDS (Direct Digital Synthesis) technology with the application of bandpass system and transmission is conducted as tonal transmission.
In both options the transmission antenna is an inductor or a set of inductors wire-wound on ferrite rods, set mutually perpendicularly.
Transfer of personal identifier signal onto the range of radio waves is conducted on the basis of tone transmitter. This is the method similar to SSB, which is a sort of amplitude modulation, in which there is only one sideband without a carrier signal. However, in this case the band is not modulated, it can be presented as a single stripe in radio frequency spectrum.
Operation of radio receiving is conducted in the receiver of alarm device 2. However, alarm device 2, as already mentioned, is a radio frequency device, it works as a signal receiver in which signal is received by means of radio frequency signal. Alarm device is equipped with directional detectors 3 as well as a computer terminal with visualisation screen.
Radio signal received from a given direction by directional detector antenna is led by the cable differentially to the computer terminal. Computer terminal as a master and calculation system contains PSoC (Programmable System on Chip) analysing, after processing the signal digitally, digital samples from radio channels - directional detectors.
During the prototypes tests directional detectors were used in the number of four to eight, placed orthogonally in relation to one another. Directional detectors possess UD electronic circuits informing the terminal about the presence of a power supply.
Computer terminal, on the basis of computer calculations and digital analysis of signals from directional detectors 3 determines and notifies the vehicle driver about the hazard of a collision with an approaching worker in real time. The result of calculations is visualized in the form of image message on TFT screen and sound signal.
The system works on the basis of safety zones I,II,III, configured in consideration with real conditions specified by of distance **d₁**, **d₂** and **d₃** between the generator **1** and alarm device **2**, and the maximum distance d₁ between these devices may reach up to 30 - 32m. The sizes of safety zones I, II, III are determined dynamically or for a static situation, and collision parameters for distances **d₁**, **d₂ and d₃** are determined on the basis of changes of measured acceleration and speed of the mobile device, also mutual accelerations and velocities of mobile device and generator **1** are considered.
Alarm device **2** is equipped in **ACC** module for measurement of particular acceleration components **X**, **Y**, **Z**, e.g. with accelerometer, and it has **ICOM** communication interface e.g. CAN or RS-485 to computer terminal. Simultaneous analysis of information from ACC module in connection with data collected by **ICOM** interface allows for the analysis of the driving style of mobile device operator, calculation of the speed and directions of movement dynamic arrangement of safety zones I,II,II based on these parameters in case they should be wider in the direction of driving in case of speed increase and appropriately narrower when speed decreases. Alarm device **2**, depending on configuration, has the possibility not to generate alarms in case of determining the stopover of a mobile device.
Alarm device **2** for each safety zone I,II,III triggers gradual alarm means for the mobile device operator. Those means are displayed on the TFT computer terminal screen using colour code known in traffic lights: green, yellow and red. Red-coded alarm requires confirmation by the operator.
Moreover, in the alarm device **2** PSoC (Programmable System on Chip) is equipped with digital multilingual speech generator enabling generation of voice warning messages (alarms) in various languages.

## Claims

1. Proximity system for securing work area with mobile devices, encompassing the generator with controlling elements, which generates magnetic field and alarm device, which is a device of radio frequency able to detect magnetic field, and the alarm device reads intensity of the magnetic field and distinguishes between intensities for the purpose of detecting whether allowable values have been exceeded as well as it generates the alarm, **characterized in that** at least one generator /**1**/ generates close magnetic field in **XY** plane and each one is an individual personal transmitter of continuous activity, which contains the **DDS** tone generator (Direct Digital Synthesis), from which the signal is modulated single-sideband onto the scope of radio waves.

2. Proximity system, according to the reservation no. 1, **characterized in that** the generator /**1**/ generates radio signal of steady intensity.

3. Proximity system, according to the reservation 1, **characterized in that** it possesses safety zones I,II,III, specified by distance **d₁**, **d₂** and **d₃** between the generator /**1**/ and alarm device /**2**/, which for each of the zones triggers gradual means of alarm.

4. Proximity system, according to reservation 1, **characterized in that** alarm device /**2**/ is used equipped with at least four directional detectors /**3**/ set orthogonally in reference to one another as well as possessing the demodulator system from which received demodulated signal is analysed by the **PSoC** (Programmable System on Chip) of the computer terminal, and alarm device /**2**/ is placed on each mobile device moving in the work area.

5. Proximity system, according to reservation 1, **characterized in that** close magnetic field operates within the range of medium waves of carrier frequency 240 kHz to 260 kHz.

6. Proximity system, according to the reservations 1 to 3, **characterized in that** the generator /**1**/ contains **DDS** tone generator (Direct Digital Synthesis) from which the signal through the bandpass system is transmitted tonally onto the range of radio waves.

7. Proximity system, according to reservation 6, **characterized in that** it makes use of alarm device /**2**/ equipped with at least four directional detectors /**3**/ set orthogonally in relation to one another as well as possessing radio receiver system with antenna, from which the received signal is analysed by the **PSoC** (Programmable System on Chip) of the computer terminal, the alarm device /**2**/ being placed on every mobile device moving in the work area.

8. Proximity system, according to reservations 6 to 7, **characterized in that** the sizes of safety zones I, II, III and collision parameters for the distance **d₁**, **d₂** and **d₃** are both determined dynamically based on the changes of measured acceleration and velocity of the mobile device.

9. Proximity system, according to the reservations 6 to 8, **characterized in that** alarm device /**2**/ is equipped with **ACC** module for measurement of particular **X,Y,Z** components of acceleration and it has **ICOM** communication interface.

10. Proximity system, according to reservations 6 to 9, **characterized in that** the **PSoC** (Programmable System on Chip) in the alarm device /**2**/ is equipped with digital multilingual speech generator.

11. Proximity system, according to reservations 6 to 10, **characterized in that** close magnetic field operates within long and medium waves of carrier frequency of 240 kHz to 600 kHz.
